# EUROPEAN PATENT SPECIFICATION

(11) **EP 1 134 932 B1**
(45) Date of publication and mention of the grant of the patent: **15.02.2006**
(21) Application number: 00440080.0
(22) Date of filing: 17.03.2000
(51) Int. Cl.: H04L 12/18, H04L 12/46, H04L 29/06

(54) **System for receiving multicast data**
System zum Empfang von Mehrfachdaten
Système pour recevoir des données de type multidestinataire

(43) Date of publication of application: 19.09.2001
(73) Proprietor: ALCATEL, 75008 Paris (FR)
(72) Inventor: Hoebeke, Rudy, 2100 Deurne (BE); Van Simpsen, Tom, 2800 Mechelen (BE)
(74) Representative: Brose, Gerhard

(56) References cited:
- WO-A-98/02821
- WO-A-98/20724
- WO-A-98/51041

## Description

This invention concerns a method for receiving multicast data in a communications network according to the preamble of Claim 1, a communications network according to the preamble of Claim 2, an Internet access server according to the preamble of Claim 6, a customer premises network termination according to the preamble of Claim 7, and program modules for executing an additional protocol.

The Internet is at the centre of a dynamic development in communications engineering. Today, Internet communication, also termed IP communication (IP = Internet Protocol), is still dominated by point-to-point communication, in which data packets, so-called IP datagrams, are sent from one sender to one specified receiver. The most frequent application is where a subscriber requests a specific message stored on a specific server by transmitting the corresponding IP address. An Internet service which will become important in the future enables the use of point-to-multipoint applications, so-called IP multicast applications, in which several users can receive specific information simultaneously, or applications in which several users can communicate with each other simultaneously.

Multicast communication is actually known as "Video-on-Demand". Here the image data of a selected film is transmitted to different users on request and at an individually chosen time from a server that contains a reservoir of various films in its memory. A problem for this service is that very high data transmission resources are required for a video transmission of a satisfactory quality. Since only limited data transmission resources are usually available in the transmission network, only a limited number of subscribers can take advantage of this service at the same time. One solution to the problem can be obtained, firstly, by limiting the individual time choice for the beginning of films to specific times (for example every half hour) and as a result identical image data are transmitted in each case to those receivers who have selected the same film at an identical time, and secondly, mechanisms are made available in the transmission network, which allow identical data streams to be reduced to one data stream, where these run in parallel between identical network elements.

Such mechanisms are known in ATM networks and are described for example in the ATM document "ATM UNI Signalling, Version 4.0" on page 120 in Appendix C under the title of "Point-to-Multipoint Connections - Cell Replication". The network, whose nodes consist of ATM switching centres, sets up a point-to-multipoint connection (Multicast Virtual Channel Connection) from the sender to the receivers via the network nodes in the form of a tree in such a way that there are no parallel paths.

Internet multicast communication, also termed IP multicast, is also known for the Internet and is described in Internet standards, such as the document RFC 1112 "Host Extensions for IP Multicasting" of the IETF (Internet Engineering Task Force). This standard defines IP Multicast as "the transmission of an IP datagram to a subscriber group", also termed a multicast group. The number of subscribers is of no significance; according to this definition it can be zero or more. The characterising feature of a multicast group is not the sender of multicast data but a multicast (IP) address allocated to this group, which represents a special IP address. According to this definition, a multicast group therefore exists as soon as a multicast address identifying the multicast group is assigned, irrespective of whether a sender or receiver is actually present. The membership of a multicast group is dynamic; it starts from the respective subscriber who wishes to receive the multicast data of this multicast group. To join or leave a multicast group he executes the so-called "Internet Multicast Group Protocol, or IGMP protocol, with a specific router. Routers represent any Internet elements which carry the IP datagrams over specific routes. Routers which can execute the IGMP protocol are also known as multicast routers. The multicast routers participating in a multicast transmission pass signals between themselves in whose order the multicast data are transmitted in the Internet in such a way that identical multicast data are not sent several times over parallel routes.

Access to the Internet is not usually effected directly from a subscriber computer, but via so-called (Internet) access networks, often by means of the public telephone network. These access networks are circuit-switched networks in which a fixed connection is temporarily set up between sender and receiver. A channel between the subscriber and the Internet is reserved for the period of communication. While each channel in the conventional telephone network has a predefined bandwidth, the bandwidth in modern ATM networks can be specified as required.

At the subscriber end, local networks frequently consist of several interconnected subscribers. The subscribers can be connected to the Internet via a customer premises network termination, CPNT, that has a connection to an access network. In modern local networks, for example the Ethernet and the use of special PPPoE protocols (PPPoE = Point-to-point-Protocol over Ethernet), that is employed between the subscribers and the network terminal, simultaneous and individual Internet communication is possible for all subscribers of the local network without additional functions being necessary in the subscriber computer.

If several subscribers of such a local network now request identical data by joining the same multicast group, it is generally sufficient to send these data only once via the access network to the network terminal which can then distribute the data to the corresponding subscribers. However, a problem arises in that the subscribers have individual tunnel connections to the Internet, one channel being reserved for each one via the access network. It is thus not easy to prevent channels with identical end points from being loaded with identical data streams.

A setting up of a plurality of virtual networks is disclosed in the International Patent Application WO 98/02821 where network traffic management is achieved based on automatically setting up a plurality of virtual networks within a single large virtual LAN. Multicast/broadcast traffic is confined to the VNET of the source, without imposing constraints on layer two addressing within the virtual LAN. VNETs are domains of users of a virtual LAN, which include members of logical networks defined at layer three or higher.

The object of this invention is to create a process and suitable means to avoid identical data streams via data channels running in parallel, in particular in IP multicast communication via an access network,

This object is achieved according to the invention by a process according to the teaching of Claim 1, a communications network according to the teaching of Claim 2, an Internet access server according to the teaching of Claim 6, a subscriber network terminal according to the teaching of Claim 7 and program modules for executing an additional protocol according to the teaching of Claims 8 and 9.

Further developments of the invention are revealed in the sub-claims and in the following description.

The invention is further explained below with the aid of the attached drawings, where:
- Fig. 1: shows schematically a communications network for Internet communication,
- Fig. 2: shows the construction of channel connections in an access network according to the prior art,
- Fig. 3: shows the construction of additional channel connections for a multicast communication when implementing the process according to the invention,
- Fig. 4: shows the sequence of the IGMP protocol, together with the sequence of the additional protocol according to the invention.

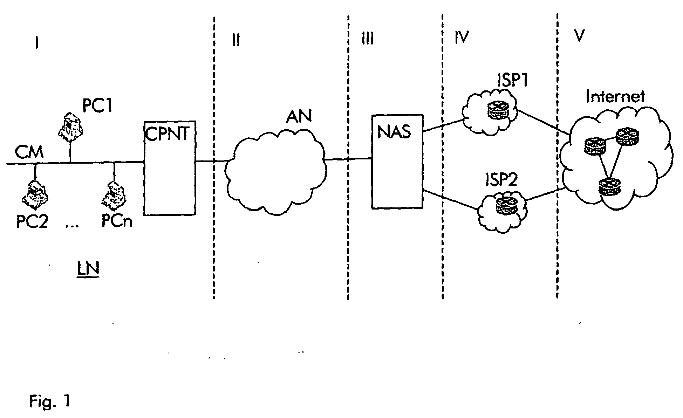

First, an example of a typical, partially simplified communications network for Internet communication with the main network facilities involved is shown with the aid of Fig. 1. From left to right, the communications network is divided into levels I-V. In level I, the subscriber level, an unspecified number of subscribers PC1, PC2, ..., PCn and a network terminal CPNT is shown, which are interconnected via a communications medium CM. The subscribers PC1, PC2, ..., PCn, the network terminal CPNT and the communications medium CM together form a local network LN. In level II, the Internet access network level, an access network AN is indicated by a cloud symbol. In level III, the Internet access provider, IAP, level, an (Internet) access server NAS is shown. The levels I-III are hereafter also referred to as access levels. In level IV, the (Internet) service provider, ISP, level, two service provider networks ISP1 and ISP2, for example, are shown, each also indicated by a cloud symbol. In level V, the Internet core network level, the actual Internet is shown, again as a cloud symbol. In the Internet service provider networks ISP1 and ISP2 and the Internet, cylinder-shaped symbols are shown, which represent the above-mentioned routers. This is intended to show that the data forwarding in these networks is effected by the IP protocol. Levels IV and V are hereafter also referred to as Internet levels.

The network terminal CPNT, the access network AN and the access server NAS are interconnected in that order. The access server NAS is connected to both Internet service provider networks ISP1 and ISP2, each of which in turn has a connection to the Internet.

Since it is assumed that the Internet protocol (IP) is used equally in the Internet service provider networks ISP1 and ISP2 and in the Internet, where the term Internet communication is used, no distinction is being made hereafter as to whether the communication of a subscriber actually takes place in the Internet or ends at a unit of an Internet service provider ISP1 or ISP2, without involving the Internet.

During the call set-up with the Internet, logical point-to-point connections are established between the individual subscribers PC1, PC2, ..., PCn and the access server NAS by using the PPP protocol (PPP = Point-to-Point Protocol) which is customary for private Internet access. There then exists a PPP communication relationship, also termed PPP session, for the duration of Internet communication.

It is assumed for the invention that the local network LN in level I facilitates the individual Internet communication of all subscribers PC1, PC2, ..., PCn. A communications medium CM which enables this, is for example the Ethernet, using the above-mentioned PPPoE protocol. By introducing the PPPoE protocol, which substantially represents an additional protocol level between the PPP protocol level and the Ethernet protocol level, unambiguous identification of all PPP sessions with the Internet occurs, by means of which each subscriber PC1, PC2, ..., PCn can identify his PPP data.

Looked at logically, point-to-point connections therefore exist in the communications medium CM between the subscribers PC1, PC2, ..., PCn and the network terminal CPNT, which are superimposed on the normal Ethernet communications protocol and are therefore also referred to as PPP tunnel connections, or simply tunnels.

The network terminal CPNT and the access server NAS are the start and end points of the circuit-switched communication via the access network AN of level II. A connection to the access network AN is made for each subscriber PC1, PC2, ..., PCn who wishes to communicate with the Internet. The continuation of a tunnel in the local communications medium CM from the network terminal CPNT to the access server NAS via an above-mentioned connection is denoted as an extension to the tunnel; for each corresponding subscriber PC1, PC2, ..., PCn, this results in a continuous, so-called private tunnel to the access server NAS, via which all Internet communication relating to him is conducted.

In actuality, the levels III and IV are implemented in very different ways. There are therefore implementations without (spatial) separation of these levels; in other implementations further sub-networks (not shown here) exist in level III. Moreover, the tasks of the aforesaid network elements, especially those of the access server (NAS) are not precisely defined; modern access servers (NAS) can therefore already possess means for carrying out routing functions. For the following exemplary embodiments it is assumed that the access server is the interface between the circuit-switched access levels I-III and the packet-switched Internet levels IV and V. In particular, it should be assumed in this case that the Internet server NAS is the end point of the above-mentioned IGMP protocol and thus takes on the tasks of an above-mentioned multicast router.

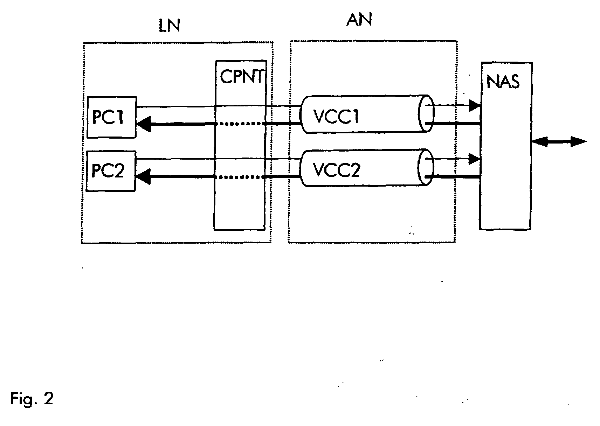

First of all, the known assumed situation of the channel set-up in an access network is described with the aid of Fig. 2. In Fig. 2 a section of Fig. 1 with levels I-III is illustrated first:

As is known from Fig. 1, the local network LN, the access network AN and the access server NAS are shown from left to right. Here, for example, the local network LN has two subscribers PC1 and PC2. The communications relationships of the subscribers PC1 and PC2 with the Internet are shown by two arrows in the forward and reverse directions, respectively, between the subscribers PC1 and PC2 on the one hand and the access server NAS on the other, the broader arrows from the access server NAS to the subscribers PC1 and PC2 denoting the frequently higher data traffic in this direction compared to the opposite direction. Two channels VCC1 and VCC2 are shown within the access network AN, each channel VCC1 and VCC2 carrying the data traffic of one subscriber PC1 or PC2, respectively.

In this case the access network AN is assumed to be an ATM network, where the above-mentioned channels are configured as Virtual Channel Connections (VCC) For each above-mentioned tunnel of the subscriber PC1 and PC2 to the access server NAS, also termed a private tunnel, one channel VCC1 or VCC2, respectively, of the access network AN is available, via which the respective data traffic of the subscribers PC1 and PC2 is forwarded to the Internet independently of the other. The task of the network terminal CPNT lies substantially in the protocol conversion of the data from the local network LN to the access network AN and vice versa. Where both subscribers PC1 and PC2 belong to the same multicast group, the corresponding (IP) multicast datagrams, like all the rest of the IP datagrams in the access server NAS are replicated and sent in parallel via both channels VCC1 and VCC2 to both subscribers PC1 and PC2.

Often the access network AN has only a limited capacity. In the case of multicast applications this can lead to undesirable bottlenecks, especially for video transmission.

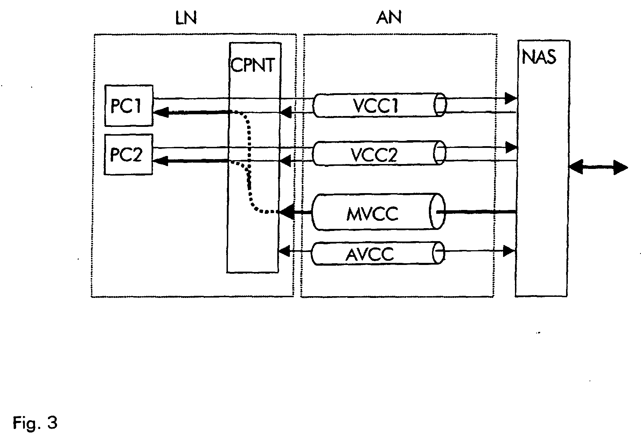

The channel structure and the forwarding of multicast data when implementing the process according to the invention is described with the aid of Fig. 3. For the example illustrated it is assumed that both subscribers PC1 and PC2 belong to the same multicast group.

Fig. 3 differs from Fig. 2 in that, additionally, a multicast data channel MVCC and a multicast protocol channel AVCC are shown between the network terminal CPNT and the access server NAS. Exactly as in Fig. 2, the data traffic is forwarded from the subscribers PC1 and PC2 to the access server NAS via the channels VCC1 and VCC2, while the multicast data specific to both subscribers PC1, PC2 are forwarded only once via the multicast data channel MVCC and only replicated in the network terminal CPNT and distributed to the subscribers PC1 and PC2. The remaining data traffic, not shown here, to the subscribers PC1 and PC2 is, furthermore, forwarded via the channels VCC1 and VCC2, respectively. The subscribers PC1 and PC2 each indicate their request to join a multicast group via their private tunnels during the execution of the IGMP protocol as described above. On receipt of the join request of the first subscriber, for example PC1, the access server NAS informs the network terminal CPNT via the multicast protocol channel AVCC that the subscriber PC1 is to receive multicast data; these data are then sent via the multicast data channel MVCC instead of via the channel VCC1. Furthermore, the remaining data are sent to the subscriber PC1 via the channel VCC1. The network terminal CPNT then inserts the multicast data into the private tunnel of the subscriber PC1, for whom this data linking process remains transparent. The insertion of the multicast data is effected by combining the channels VCC1 and MVCC; in this case combination is referred to as association. If, in the course of time, a further subscriber, for example PC2, wishes to join the same multicast group, the access server NAS informs the network terminal CPNT via the multicast protocol channel AVCC that the subscriber PC2 is to receive the multicast data via the channel MVCC. The association of the channels VCC2 and MVCC is then carried out in the network terminal CPNT.

This example shows that when a subscriber PC1 joins a multicast group, redirection of the corresponding multicast data takes place via a multicast data channel MVCC. For each additional subscriber PC1, PC2, ..., PCn, who then also wishes to join this multicast group, it is then only necessary to make the corresponding association between his channel and the existing multicast data channel MVCC. Of course this procedure is not mandatory; this redirection could also be effected after a specific number of subscribers only, for example from the second subscriber on.

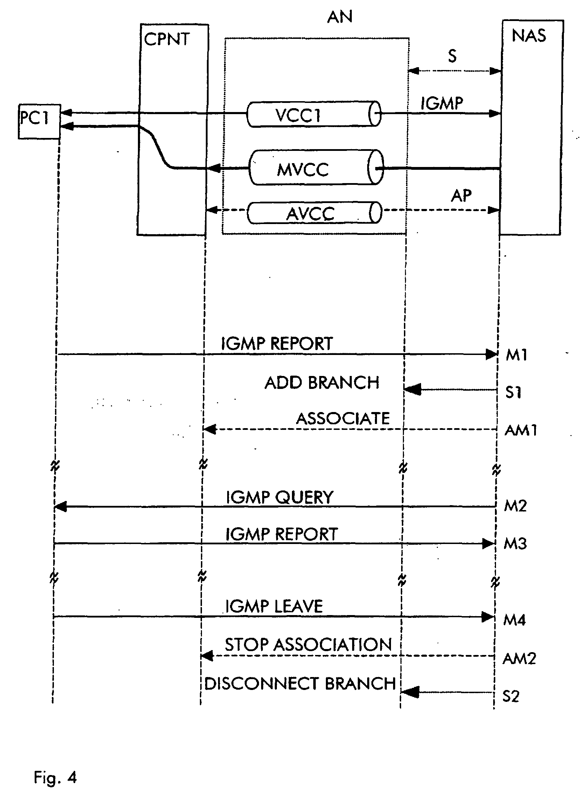

In Fig. 4 an exemplary sequence of the additional protocol AP according to the invention that is forwarded via the multicast signalling channel AVCC is described in conjunction with the sequence of the IGMP protocol as described above. Here the upper part of the diagram in Fig. 4 corresponds to the conditions in Fig. 3. However, for simplification, only one subscriber PC1 and thus only one channel VCC1 is illustrated. The IGMP protocol runs via this channel. In addition to Fig. 3, a protocol S is shown between the access server NAS and the access network AN.

In the lower part of the diagram in Fig. 4 the (protocol) messages exchanged during an exemplary sequence of said protocol are shown in chronological order from top to bottom.

A message M1 or IGMP REPORT of the IGMP protocol is sent from the subscriber PC1 to the access server NAS; a message S1 or ADD BRANCH of the protocol S is sent from the access server NAS to the access network AN; a message AM1 or ASSOCIATE of the additional protocol AP is sent from the access server NAS to the network terminal CPNT; a message M2 or IGMP QUERY of the IGMP protocol is sent from the access server NAS to the subscriber PC1; a message M3 or IGMP REPORT of the IGMP protocol is sent from the subscriber PC1 to the access server NAS; a message M4 or IGMP LEAVE of the IGMP protocol is sent from the subscriber PC1 to the access server NAS; a message AM2 or STOP ASSOCIATION of the additional protocol AP is sent from the access server NAS to the network terminal CPNT; a message S2 or DISCONNECT BRANCH of the protocol S is sent from the access server NAS to the access network AN.

In this case the IGMP protocol is transmitted via the channel VCC1 which belongs to the private tunnel of the subscriber PC1. The M1 or IGMP REPORT message contains the multicast address of the multicast group which the subscriber PC1 wishes to join. The M2 or IGMP QUERY message contains the request to inform the subscriber PC1 whether he is still joining the multicast group. The subscriber PC1 confirms his participation by sending the M3 or IGMP REPORT message, which has the same content as the M1 message. The IGMP LEAVE message contains the wish of the subscriber PC1 to end participation in a specific multicast group. The M4 message can be optionally omitted: the M2 and M3 messages are used to check whether a subscriber of a specific multicast group is still present. If the access server (NAS) receives no reply from at least one of the subscribers PC1, PC2, ..., PCn, then it can discontinue the transmission of the corresponding multicast data without needing to receive the M4 or IGMP LEAVE message.

The additional protocol AP is transmitted via the multicast signalling channel AVCC. The AM1 or ASSOCIATE message contains the request to the network terminal CPNT to associate the channel VCC1 with the multicast data channel MVCC, that is to say to insert the data sent via the multicast data channel into the private tunnel of the subscriber PC1. The AM2 or STOP ASSOCIATION message contains the request to the network terminal CPNT to end the association between the multicast data channel MVCC and the channel VCC1.

The execution of the protocol S with the ADD BRANCH and DISCONNECT BRANCH messages is used to set up each multicast data channel MVCC only when actual data are to be transmitted via this channel, and to clear it down again as soon as data are no longer sent via it. With the S1 or ADD BRANCH message the access server NAS requests the access network AN to set up a multicast data channel MVCC to the network terminal CPNT. With the S2 or DISCONNECT BRANCH message the access network AN is requested to clear down the multicast data channel MVCC. The execution of this protocol is optional. Instead of this, a fixed number of static channels could also be maintained. Here the multicast protocol channel AVCC is considered as a static channel; it could of course be set up and cleared down exactly like each multicast data channel MVCC. In this case the setting-up of the multicast protocol channel AVCC should occur no later than the setting-up of the first multicast data channel MVCC. It can then be cleared down when there is no longer any multicast data channel.

It should be mentioned at this point that a confirmation (acknowledge) message can be provided in the reverse direction in each case for the S1 or ADD BRANCH, S2 or DISCONNECT BRANCH, AM1 or ASSOCIATE and AM2 or STOP ASSOCIATION messages. When one of these acknowledge messages is absent, certain measures can be taken, for example repeated transmission or transmission via other available channels. Such measures are found in the prior art; in this case they have to be tailored to the special conditions and facilities of the access network AN in particular and it is not intended to describe them in further detail here.

By executing the IGMP protocol in conjunction with the additional protocol according to the invention, any number of subscribers PC1, PC2, ..., PCn of the local network LN can join and leave a multicast group.

In an alternative to the process according to the invention, the multicast protocol channel AVCC and the execution of the additional protocol AP are dispensed with. By intercepting the messages of the subscribers PC1, PC2, ..., PCn during the execution of the IGMP protocol (IGMP snooping), the network terminal CPNT can assign the multicast data of various multicast groups to the corresponding subscribers PC1, PC2, ..., PCn and effect the distribution as described above.

Of course, this process has the following substantial disadvantages:
- A global unambiguous multicast address distribution is not guaranteed. If the, presumably infrequent, case arises where various multicast groups that are assigned to different Internet service providers have the same addresses, the access server NAS can nevertheless request various multicast data channels, since the access server NAS can detect from the origin of the data that these data come from different Internet service providers, ISP. With no facility for passing this information to the network terminal CPNT, the latter is not able to distinguish between multicast data having the same multicast address. This then inevitably causes these data to be mixed up in the local network (LN) and thus to illegibility at all the subscribers concerned.
- As with the other Internet access checks, the individual access check on specific multicast groups is preferably made in the access server NAS, for example by checking a submitted password. If, by sending a corresponding message, a subscriber PC1, PC2, ..., PCn without access authorisation now wishes to join a multicast group in which one or more additional subscribers PC1, PC2, ..., PCn of the local network LN are participating, then these data of the corresponding multicast data channel MVCC of the network CPNT are forwarded to these subscribers, without the access server NAS being able to prevent this. Consequently, an effective access check of the access server NAS for participation in multicast groups is not possible.

## Claims

1. Method for receiving multicast data from an Internet communications network, where tunnel connections between the subscribers (PC1, PC2, ..., PCn) and a network element (NAS) exist, with logical point-to-multipoint connections between a sender of multicast data and several subscribers (PC1, PC2, ..., PCn), wherein a protocol (IGMP) for participation in a multicast group is executed between the subscribers (PC1, PC2, .... PCn) and the network element (NAS) remote from the subscribers, **characterised in that** if tunnel connections already exist, an additional protocol (AP) is executed between the network element (NAS) remote from the subscribers and a network element (CPNT) local to the subscribers, as a result of which identical multicast data of several parallel tunnel connections are sent out only once between these network elements.

2. Communications network with point-to-multipoint connections between a sender of multicast data and several subscribers (PC1, PC2, ..., PCn), where tunnel connections between the subscribers (PC1, PC2, ..., PCn) and a network element (NAS) exist, wherein the subscribers (PC1, PC2, ..., PCn) have, in addition to network elements (NAS) remote from the subscribers of the communications network, protocol execution means for executing a protocol (IGMP) for participation in a multicast group, **characterised in that** if tunnel connections exist, organisation means are provided in the network element (NAS) remote from the subscribers, which arrange for multicast data of one multicast group to be sent out only once between the network element (NAS) remote from the subscribers and a network element (CPNT) local to the subscribers via a multicast data channel (MVCC) instead of via tunnel connections, wherein evaluation means are provided in the network element (CPNT) local to the subscribers, which, on the basis of an evaluation of protocols (IGMP, AP) perform the allocation of the multicast data sent via the multicast data channel (MVCC) to the corresponding subscribers (PC1, PC2, ..., PCn), and wherein distribution means are provided in the network element (CPNT) local to the subscribers for distribution of the multicast data to the corresponding subscribers (PC1, PC2, ..., PCn).

3. Communications network according to Claim 2, **characterised in that** the network element (NAS) remote from the subscribers and the network element (CPNT) local to the subscribers each have additional protocol execution means for executing an additional protocol (AP) in which the network element (NAS) remote from the subscribers informs the network element (CPNT) local to the subscribers of those respective subscribers (PC1, PC2, ..., PCn) to which the multicast data of the various multicast groups are to be transmitted.

4. Communications network according to Claim 2, **characterised in that** an Internet access network (AN), constructed as an ATM network, in which a channel connection in the form of a so-called "Virtual Channel Connection" (VCC1, VCC2, MVCC, AVCC) for each tunnel connection of the subscribers (PC1, PC2, ..., PCn) as well as for each multicast group involving the subscribers (PC1, PC2, ..., PCn), and for the additional protocol, can be established between the network element (NAS) remote from the subscribers and the network element (CPNT) local to the subscribers.

5. Communications network according to Claim 4, **characterised in that** signalling means are provided, which execute a protocol (S) between the ATM network and a network unit (NAS) executing the additional protocol (AP), as a result of which channel connections can be set up for multicast data (MVCC) as required.

6. Internet access server (NAS) that has an interface to an Internet access network (AN), via which at least one channel of a subscriber (PC1, PC2, ..., PCn) can be set up for his individual tunnel connection, and setting-up means are provided in order to set up further channels (MVCC, AVCC), **characterised in that** provision means are provided in order to provide the multicast data, on a further channel (MVCC) instead of on the channels (VCC1, VCC2) exclusively specified for said data, and additional protocol execution means for executing an additional protocol (AP) are provided in order to inform a network element (CPNT) terminating the local network (LN) of the subscribers (PC1, PC2, ..., PCn), which subscribers (PC1, PC2) should receive these data.

7. Customer premises network termination (CPNT) that has an interface to one or more subscribers (PC1, PC2, ..., PCn) and a further interface to an Internet access network (AN), via which channels of one or more subscribers (PC1, PC2, ..., PCn) can be set up for their individual tunnel connections and further channels (MVCC and AVCC) can be set up, **characterised in that** additional protocol execution means for executing an additional protocol (AP) are provided, in which the subscriber network terminal (CPNT) is informed of those subscribers (PC1, PC2) to which the multicast data received via further channels (MVCC) are to be additionally transmitted, and insertion means are provided, in order to insert these data into the tunnel connections of the specified subscribers (PC1, PC2).

8. A computer program product for executing an additional protocol (AP) in a network element (NAS) remote from the subscribers, comprising code means adapted to perform when running the steps of:
- Detection of the subscriber's request of a subscriber (PC1, PC2, ..., PCn) to a multicast group by evaluation of the protocol message for participation in a multicast group (IGMP), and
- Sending an additional message (ASSOCIATE) to a network element (CPNT) local to the subscribers, with the information about that subscriber or those subscribers (PC1, PC2) to which the data of a multicast channel (MVCC) are to be transmitted.

9. A computer program product for executing an additional protocol (AP) in a network element (CPNT) local to the subscribers, with subscribers (PC1, PC2, ..., PCn) connected thereto, comprising code means adapted to perform when running the steps of:
- Receipt of an additional message (ASSOCIATE) from the network element (NAS) remote from the subscribers,
- Evaluation of the information contained in the additional message (ASSOCIATE) that specified subscribers or a specified subscriber (PC1, PC2) are to receive data of a specified multicast channel (MVCC), and
- Initiating the distribution to the corresponding subscriber (PC1, PC2) of the data being received or to be received via the specified multicast channel (MVCC).

10. A computer program product according to Claim 8, **characterized by** comprising code means adapted to perform when running the additional steps of:
- Detection of the request for ending the participation of a subscriber (PC1, PC2, ..., PCn) in a multicast group by evaluating the protocol messages for participation in a multicast group (IGMP), and
- Sending an additional message (STOP ASSOCIATION) to the network element (CPNT) local to the subscribers, with the information about those subscribers (PC1, PC2, ..., PCn) which should no longer receive any further data of a specified multicast channel (MVCC).

11. Computer program product according to Claim 9, **characterized by** comprising code means adapted to perform when running the additional steps of:
- Receipt of an additional message (STOP ASSOCIATION) from the network element (NAS) remote from the subscribers,
- Evaluation of the information contained in the additional message (STOP ASSOCIATION) about those subscribers (PC1, PC2) to which data of a specified multicast channel (MVCC) should no longer be transmitted, and
- Initiating the ending of the distribution of the data received via the specified multicast channel (MVCC) to the corresponding subscribers (PC1, PC2).

## Patentansprüche

1. Verfahren zum Empfangen von Mehrfachdaten von einem Internet-Kommunikationsnetzwerk, wo Tunnelverbindungen zwischen den Teilnehmern (PC1, PC2, ..., PCn) und einem Netzelement (NAS) vorhanden sind, mit logischen Punkt-zu-Mehrpunkt-Verbindungen zwischen einem Sender von Mehrfachdaten und mehreren Teilnehmern (PC1, PC2, ..., PCn), in welchem ein Protokoll (IGMP) für die Teilnahme in einer Mehrfachgruppe zwischen den Teilnehmern (PC1, PC2, ..., PCn) und dem Netzelement (NAS) entfernt von den Teilnehmern ausgeführt wird, **dadurch gekennzeichnet, daß,** wenn Tunnelverbindungen bereits vorhanden sind, ein zusätzliches Protokoll (AP) zwischen dem Netzelement (NAS) entfernt von den Teilnehmern und einem Netzelement (CPNT) lokal zu den Teilnehmern ausgeführt wird, als eine Folge dessen identische Mehrfachdaten von mehreren parallelen Tunnelverbindungen nur einmal zwischen diesen Netzelementen ausgesendet werden.

2. Kommunikationsnetzwerk mit Punkt-zu-Mehrpunkt-Verbindungen zwischen einem Sender von Mehrfachdaten und mehreren Teilnehmern (PC1, PC2, .... PCn), wo Tunnelverbindungen zwischen den Teilnehmern (PC1, PC2, ..., PCn) und einem Netzelement (NA5) vorhanden sind, in welchem die Teilnehmer (PC1, PC2, ..., PCn), außer den Netzelementen (NAS) entfernt von den Teilnehmern des Kommunikationsnetzwerkes, Protokollausführungsmittel zum Ausführen eines Protokolls (IGMP) für die Teilnahme in einer Mehrfachgruppe aufweisen, **dadurch gekennzeichnet, daß,** wenn Tunnelverbindungen vorhanden sind, Organisationsmittel in dem Netzelement (NAS) entfernt von den Teilnehmern bereitgestellt werden, welche dafür sorgen, daß Mehrfachdaten von einer Mehrfachgruppe nur einmal zwischen dem Netzelement (NAS) entfernt von den Teilnehmern und einem Netzelement (CPNT) lokal zu den Teilnehmern über einen Mehrfachdatenkanal (MVCC) statt über Tunnelverbindungen ausgesendet werden, in welchem Auswertemittel in dem Netzelement (CPNT) lokal zu den Teilnehmern bereitgestellt werden, welche auf der Basis einer Auswertung von Protokollen (IGMP, AP) die Zuordnung der Mehrfachdaten durchführen, die über den Mehrfachdatenkanal (MVCC) an die entsprechenden Teilnehmer (PC1, PC2, ..., PCn) gesendet wurden, und in welchem Verteilungsmittel in dem Netzelement (CPNT) lokal zu den Teilnehmern für die Verteilung der Mehrfachdaten an die entsprechenden Teilnehmer (PC1, PC2, ..., PCn) bereitgestellt werden.

3. Kommunikationsnetzwerk nach Anspruch 2, **dadurch gekennzeichnet, daß** das Netzelement (NAS) entfernt von den Teilnehmern und das Netzelement (CPNT) lokal zu den Teilnehmern jedes zusätzliche Protokollausführungsmittel zum Ausführen eines zusätzlichen Protokolls (AP) aufweisen, in welchem das Netzelement (NAS) entfernt von den Teilnehmern das Netzelement (CPNT) lokal zu den Teilnehmern über die entsprechenden Teilnehmer (PC1, PC2, ..., PCn) informiert, an welche die Mehrfachdaten der verschiedenen Mehrfachgruppen zu übertragen sind.

4. Kommunikationsnetzwerk nach Anspruch 2, **dadurch gekennzeiehnet, daß** ein Internet-Zugangsnetz (AN), das wie ein ATM-Netz aufgebaut ist, in welchem eine Kanalverbindung in der Form einer sogenannten "Virtuellen Kanalverbindung" (VCC1, VCC2, MVCC, AVCC) für jede Tunnelverbindung der Teilnehmer (PC1, PC2, ..., PCn) sowie für jede Mehrfachgruppe, die die Teilnehmer (PC1, PC2, ..., PCn) einschließt, und für das zusätzliche Protokoll, zwischen dem Netzelement (NAS) entfernt von den Teilnehmern und dem Netzelement (CPNT) lokal zu den Teilnehmern aufgebaut werden kann.

5. Kommunikationsnetzwerk nach Anspruch 4, **dadurch gekennzeichnet, daß** Zeichengabemittel bereitgestellt werden, welche ein Protokoll (S) zwischen dem ATM-Netz und einer Netzeinheit (NAS) ausführen, die das zusätzliche Protokoll (AP) ausführt, als eine Folge dessen Kanalverbindungen für Mehrfachdaten (MVCC) wie gefordert aufgebaut werden können.

6. Internet-Zugangsserver (NAS), der eine Schnittstelle zu einem Internet-Zugangsnetz (AN) aufweist, über welche mindestens ein Kanal eines Teilnehmers (PC1, PC2, ..., PCn) für seine einzelne Tunnelverbindung aufgebaut werden kann, und Aufbaumittel werden bereitgestellt, um weitere Kanäle (MVCC, AVCC) aufzubauen, **dadurch gekennzeichnet, daß** Bereitstellungsmittel bereitgestellt werden, um die Mehrfachdaten auf einem weiteren Kanal (MVCC) statt auf den Kanälen (VCC1, VCC2) bereitzustellen, die ausschließlich für Daten bestimmt sind, und zusätzliche Protokollausführungmittel zum Ausführen eines zusätzlichen Protokolls (AP) werden bereitgestellt, um ein Netzelement (CPNT) zu informieren, das das lokale Netz (LN) der Teilnehmer (PC1, PC2, ..., PCn) abschließt, welche Teilnehmer (PC1, PC2) diese Daten empfangen sollen.

7. Teilnehmerbereich-Netzabschluß (CPNT), der eine Schnittstelle zu einem oder mehr Teilnehmern (PC1, PC2, ..., PCn) und eine weitere Schnittstelle zu einem Internet-Zugangsnetz (AN) aufweist, über welchen Kanäle von einem oder mehr Teilnehmern (PC1, PC2, ..., PCn) für ihre einzelnen Tunnelverbindungen aufgebaut werden können und weitere Kanäle (MVCC und AVCC) aufgebaut werden können, **dadurch gekennzeichnet, daß** zusätzliche Protokollausführungsmittel zum Ausführen eines zusätzlichen Protokolls (AP) bereitgestellt werden, in welchem das Teilnehmer-Netzendgerät (CPNT) über die Teilnehmer (PC1, PC2) informiert wird, an welche Mehrfachdaten, die über weitere Kanäle (MVCC) empfangen wurden, außerdem zu übertragen sind, und Einfügemittel werden bereitgestellt, um diese Daten in die Tunnelverbindungen der vorgegebenen Teilnehmer (PC1, PC2) einzufügen.

8. Computerprogrammprodukt zum Ausführen eines zusätzlichen Protokolls (AP) in einem Netzelement (NAS) entfernt von den Teilnehmern, umfassend Codemittel, die angepaßt sind, um während des Betriebes die Schritte auszuführen:
- Erkennen der Teilnehmeranforderung eines Teilnehmers (PC1, PC2, ..., PCn) an eine Mehrfachgruppe durch Auswertung der Protokollmeldung für die Teilnahme in einer Mehrfachgruppe (IGMP), und
- Senden einer zusätzlichen Meldung (VEREINIGEN) an ein Netzelement (CPNT) lokal zu den Teilnehmern, mit den Informationen über diesen Teilnehmer oder diese Teilnehmer (PC1, PC2), an welche die Daten eines Mehrfachkanals (MVCC) zu übertragen sind.

9. Computerprogrammprodukt zum Ausführen eines zusätzlichen Protokolls (AP) in einem Netzelement (CPNT) lokal zu den Teilnehmern mit den damit verbundenen Teilnehmern (PC1, PC2, ..., PCn), umfassend Codemittel, die angepaßt sind, um während des Betriebes die Schritte auszuführen:
- Empfangen einer zusätzlichen Meldung (VEREINIGEN) von dem Netzelement (NAS) entfernt von den Teilnehmern,
- Auswerten der in der zusätzlichen Meldung (VEREINIGEN) enthaltenen Informationen, daß die vorgegebenen Teilnehmer oder ein vorgegebener Teilnehmer (PC1, PC2) die Daten eines vorgegebenen Mehrfachkanals (MVCC) zu empfangen haben, und
- Auslösen der Verteilung der Daten, die über den vorgegebenen Mehrfachkanal(HVCC) empfangen werden oder zu empfangen sind, an die entsprechenden Teilnehmer (PC1, PC2).

10. Computerprogrammprodukt nach Anspruch 8, **gekennzeichnet durch** Umfassen von Codemitteln, die angepaßt sind, um während des Betriebes die zusätzlichen Schritte durchzuführen:
- Erkennen der Anforderung zum Beenden der Teilnahme eines Teilnehmers (PC1, PC2, ..., PCn) in einer Mehrfachgruppe **durch** Auswerten der Protokollmeldungen für die Teilnahme in einer Mehrfachgruppe (IGMP), und
- Senden einer zusätzlichen Meldung (VEREINIGUNG STOPPEN) an das Netzelement (CPNT) lokal zu den Teilnehmern, mit den Informationen über die Teilnehmer (PC1, PC2, ..., PCn), welche keine weiteren Daten mehr von einem vorgegebenen Mehrfachkanal (MVCC) empfangen sollen.

11. Computerprogrammprodukt nach Anspruch 9, **gekennzeichnet durch** Umfassen von Codemitteln, die angepaßt sind, um während des Betriebes die zusätzlichen Schritte durchzuführen:
- Empfangen einer zusätzlichen Meldung (VEREINIGUNG STOPPEN) von dem Netzelement (NAS) entfernt von den Teilnehmern,
- Auswerten der in der zusätzlichen Meldung (VEREINIGUNG STOPPEN) über diese Teilnehmer (PC1, PC2) enthaltenen Informationen, an welche Daten von einem vorgegebenen Mehrfachkanal (MVCC) nicht mehr gesendet werden sollen, und
- Auslösen des Beendens der Verteilung der Daten, die über den vorgegebenen Mehrfachkanal (MVCC) empfangen wurden, an die entsprechenden Teilnehmer (PC1, PC2).

## Revendications

1. Procédé de réception de données de multidiffusion à partir d'un réseau de communication Internet, où des tunnels de liaison entre les abonnés (PC1, PC2, ..., PCn) et un élément de réseau (NAS) existent, avec des liaisons point-multipoint logiques entre un expéditeur de données de multidiffusion et plusieurs abonnés (PC1, PC2, ..., PCn), dans lequel un protocole (IGMP) de participation à un groupe de multidiffusion est exécuté entre les abonnés (PC1, PC2, ..., PCn) et l'élément de réseau (NAS) distant des abonnés, **caractérisé en ce que**, si des tunnels de liaison existent déjà, un protocole additionnel (AP) est exécuté entre l'élément de réseau (NAS) distant des abonnés et un élément de réseau (CPNT) situé chez les abonnés, en conséquence de quoi des données de multidiffusion identiques de plusieurs tunnels de liaison parallèles ne sont envoyés qu'une seule fois entre ces éléments de réseau.

2. Réseau de communication avec des liaisons point-multipoint entre un expéditeur de données de multidiffusion et plusieurs abonnés (PC1, PC2, ..., PCn), où des tunnels de liaison entre les abonnés (PC1, PC2, ..., PCn) et un élément de réseau (NAS) existent, dans lequel les abonnés (PC1, PC2, ..., PCn) ont, en plus d'éléments de réseau (NAS) distants des abonnés du réseau de communication, des moyens d'exécution de protocole pour exécuter un protocole (IGMP) de participation à un groupe de multidiffusion, **caractérisé en ce que**, si des tunnels de liaison existent, des moyens d'organisation sont fournis dans l'élément de réseau (NAS) distant des abonnés, qui prennent des dispositions pour que des données de multidiffusion d'un groupe de multidiffusion ne soient envoyées qu'une seule fois entre l'élément de réseau (ATAS) distant des abonnés et un élément de réseau (CPNT) situé chez les abonnés via une voie de données de multidiffusion (MVCC) au lieu de l'être via des tunnels de liaison, dans lequel des moyens d'évaluation sont fournis dans l'élément de réseau (CPNT) situé chez les abonnés, qui, sur la base d'une évaluation de protocoles (IGMP, AP), accomplissent l'affectation des données de multidiffusion envoyées via la voie de données de multidiffusion (MVCC) aux abonnés correspondants (PC1, PC2, ..., PCn), et dans lequel des moyens de distribution sont fournis dans l'élément de réseau (CPNT) situé chez les abonnés pour la distribution des données de multidiffusion aux abonnés correspondants (PC1, PC2, ..., PCn).

3. Réseau de communication selon la revendication 2, **caractérisé en ce que** l'élément de réseau (NAS) distant des abonnés et l'élément de réseau (CPNT) situé chez les abonnés ont chacun des moyens d'exécution de protocole additionnel pour exécuter un protocole additionnel (AP) dans lequel l'élément de réseau (NAS) distant des abonnés informe l'élément de réseau (CPNT) situé chez les abonnés des abonnés respectifs (PC1, PC2, ..., PCn) à qui les données de multidiffusion des divers groupes de multidiffusion doivent être transmises.

4. Réseau de communication selon la revendication 2, **caractérisé en ce qu'**un réseau d'accès Internet (AN), construit comme un réseau ATM, dans lequel une voie de liaison sous la forme de ce qu'on appelle "Virtual Channel Connection : voie de liaison virtuelle" (VCC1, VCC2, MVCC, AVCC) correspondant à chaque tunnel de liaison des abonnés (PC1, PC2, ..., PCn) ainsi qu'à chaque groupe de multidiffusion faisant intervenir les abonnés (PC1, PC2, ..., PCn), et au protocole additionnel, peut être établie entre l'élément de réseau (NAS) distant des abonnés et l'élément de réseau (CPNT) situé chez les abonnés.

5. Réseau de communication selon la revendication 4, **caractérisé en ce que** des moyens de signalisation sont installés, qui exécutent un protocole (S) entre le réseau ATM et une unité de réseau (NAS) exécutant le protocole additionnel (AP), en conséquence de quoi des voies de liaison peuvent être établies pour des données de multidiffusion (MVCC) selon les besoins.

6. Serveur d'accès Internet (NAS) qui possède une interface avec un réseau d'accès Internet (AN), par l'intermédiaire de laquelle au moins une voie d'un abonné (PC1, PC2, ..., PCn) peut être établie pour son tunnel de liaison individuel, et des moyens d'établissement sont installés pour établir d'autres voies (MVCC, AVCC), **caractérisé en ce que** des moyens de fourniture sont fournis pour fournir les données de multidiffusion, sur une autre voie (MVCC) plutôt que sur les voies (VCC1, VCC2) spécifiées exclusivement pour lesdites données, et des moyens d'exécution de protocole additionnel servant à exécuter un protocole additionnel (AP) sont fournis pour indiquer à un élément de réseau (CPNT) terminant le réseau local (LN) des abonnés (PC1, PC2, ..., PCn) quels abonnés (PC1, PC2) doivent recevoir ces données.

7. Terminaison de réseau dans les locaux du client (CPNT) qui possède une interface avec un ou plusieurs abonnés (PC1, PC2, ..., PCn) et une autre interface avec un réseau d'accès Internet (AN), au moyen desquelles des voies d'un ou de plusieurs abonnés (PC1, PC2, ..., PCn) peuvent être établies pour leurs tunnels de liaison individuels et d'autres voies (MYCC et AVCC) peuvent être établies, **caractérisée en ce que** des moyens d'exécution d'un protocole additionnel servant à exécuter un protocole additionnel (AP) sont fournis, où le terminal de réseau d'abonné (CPNT) est informé des abonnés (PC1, PC2) à qui les données de multidiffusion reçues via d'autres voies (MVCC) doivent être transmises en plus, et des moyens d'introduction sont fournis pour introduire ces données dans les tunnels de liaison des abonnés spécifiés (PC1, PC2).

8. Module de programme destiné à exécuter un protocole additionnel (AP) dans un élément de réseau (NAS) distant des abonnés, comprenant des moyens de code adaptés pour effectuer lorsqu'ils fonctionnent les étapes suivantes :
• détection de la demande d'abonné d'un abonné (PC1, PC2, ..., PCn) à un groupe de multidiffusion par évaluation du message du protocole en vue de la participation à un groupe de multidiffusion (IGMP), et
• envoi d'un message supplémentaire (ASSOCIATE) à un élément de réseau (CPNT) situé chez les abonnés, avec les informations sur l'abonné ou les abonnés (PC1, PC2) à qui les données d'une voie de multidiffusion (MVCC) doivent être transmises.

9. Module de programme destiné à exécuter un protocole additionnel (AP) dans un élément de réseau (CPNT) situé chez les abonnés, les abonnés (PC1, PC2, ..., PCn) étant connectés à celui-ci, comprenant des moyens de code adaptés pour effectuer lorsqu'ils fonctionnent les étapes suivantes :
• réception d'un message supplémentaire (ASSOCIATE) en provenance de l'élément de réseau (NAS) distant des abonnés,
• évaluation des informations contenues dans le message supplémentaire (ASSOCIATE) qui spécifiait quels abonnés ou quel abonné spécifié (PC1, PC2) doivent recevoir des données d'une voie de multidiffusion spécifiée (MVCC), et
• déclenchement de la distribution à l'abonné correspondant (PC1, PC2) des données reçues ou à recevoir via la voie de multidiffusion spécifiée (MVCC).

10. Module de programme selon la revendication 8, **caractérisé par le fait qu'**il comprend des moyens de code adaptés pour effectuer lorsqu'ils fonctionnent les étapes supplémentaires suivantes :
• détection de la requête de fin de participation d'un abonné (PC1, PC2, ..., PCn) à un groupe de multidiffusion en évaluant les messages de protocole concernant la participation à un groupe de multidiffusion (IGMP), et
• envoi d'un message supplémentaire (STOP ASSOCIATION) à l'élément de réseau (CPNT) situé chez les abonnés, avec les informations sur les abonnés (PC1, PC2, ..., PCn) qui ne doivent plus recevoir aucune donnée supplémentaire d'une voie de multidiffusion spécifiée (MVCC).

11. Module de programme selon la revendication 9, **caractérisé par le fait qu'**il comprend des moyens de code adaptés pour effectuer lorsqu'ils fonctionnent les étapes supplémentaires suivantes :
• réception d'un message supplémentaire (STOP ASSOCIATION) en provenance de l'élément de réseau (NAS) distant des abonnés,
• évaluation des informations contenues dans le message supplémentaire (STOP ASSOCIATION) sur les abonnés (PC1, PC2) à qui les données d'une voie de multidiffusion spécifiée (MVCC) ne doivent plus être transmises, et
• déclenchement de la fin de la distribution des données reçues via la voie de multidiffusion spécifiée (MVCC) aux abonnés correspondants (PC1, PC2).
